# EUROPÄISCHE PATENTANMELDUNG

(11) **EP 2 482 429 A1**
(43) Veröffentlichungstag der Anmeldung: **01.08.2012**
(21) Anmeldenummer: 11152820.4
(22) Anmeldetag: 01.02.2011
(51) Int. Cl.: H02K 5/24, H02K 15/02, H02K 1/18

(54) **Stator für einen getriebelosen Antrieb einer Rohrmühle**

(71) Anmelder: ABB Schweiz AG, 5400 Baden (CH)
(72) Erfinder: Fürst, Axel, 5235, Rüfenach (CH)

(57) **Zusammenfassung**

Gegenstand der Erfindung ist es, eine radiale Relativbewegung zwischen einem Statorkern und einem Rahmen eines Stators für einen getriebelosen Antrieb einer Rohrmühle durch ein elastisches Formelement zu kompensieren. Dieses elastische Formelement kann dabei entweder zwischen dem Statorkern und dem Rahmen vorhanden sein, im dem Statorkern integriert sein oder in dem Rahmen integriert sein. Dadurch wird eine Kompensation der radialen Relativbewegung mit verminderter Reibung ermöglicht.

## Beschreibung

### TECHNISCHES GEBIET

Die vorliegende Erfindung bezieht sich auf das Gebiet getriebeloser Antriebe von Rohrmühlen. Sie betrifft einen Stator für einen getriebelosen Antrieb einer Rohrmühle mit einem Statorkern zur Aufnahme von Statorwicklungen und einem radial ausserhalb des Statorkernes angeordneten Rahmen zur Fixierung des Statorkernes.

### STAND DER TECHNIK

Rohrmühlen werden zum Mahlen von Erzen, insbesondere von Kupfererzen, verwendet. Dabei ist ein Mühlenkörper einer Rohrmühle mit einer Drehachse quer zu einem Gravitationsfeld ausgerichtet und wird von einem Antrieb in eine Drehbewegung um die Drehachse versetzt.

Bei Rohrmühlen ist oft ein getriebeloser Antrieb zur Ausführung der Drehbewegung vorhanden. Hierbei ist ein Rotor des getriebelosen Antriebes direkt auf dem Mühlenkörper angebracht. Als Gegenstück ist ein Stator aussen um den Rotor herum angeordnet. Der Stator, welcher typischerweise einen Durchmesser von 6 bis 15 m aufweist, umfasst einen Statorkern und einen Rahmen. Der Statorkern nimmt Statorwicklungen auf. Über den aussen liegenden Rahmen ist der Statorkern mit einem Fundament verbunden und in seiner Lage mechanisch fixiert. Während des Betriebes der Rohrmühle kommt es zu einer Erwärmung des Statorkernes, die aufgrund einer thermischen Ausdehnung des Statorkernes zu einer radialen Relativbewegung zwischen dem Statorkern und dem Rahmen führt. Die radiale Relativbewegung steht im Konflikt mit der mechanischen Fixierung des Statorkernes durch den Rahmen und führt zu enormen mechanischen Belastungen der Verbindung zwischen dem Statorkern und dem Rahmen.

Zur Lösung dieses Problems gibt es folgende Grundansätze. Entweder wird der radialen Relativbewegung entgegengewirkt, die radiale Relativbewegung unterbunden oder die radiale Relativbewegung kompensiert. Für einen ersten Grundansatz muss die Verbindung zwischen dem Statorkern und dem Rahmen auf die enormen mechanischen Belastungen dimensioniert sein. Dies führt zu einem hohen Materialaufwand oder einer Verwendung von mechanisch sehr leistungsfähigen Materialien und damit verbundenen Kosten. Um die radiale Relativbewegung zu verhindern, muss die Erwärmung des Statorkernes, als Ursache für die thermische Ausdehnung, vermieden werden. Dieser zweite Grundansatz ist in der Praxis allerdings ungeeignet, da bei einer mechanischen Antriebsleistung von einigen Megawatt eine, für die Erwärmung verantwortliche, Verlustleistung im Statorkern im Kilowatt-Bereich liegt und eine Abführung solcher Verlustleistung ohne nennenswerte thermische Ausdehnung nur sehr aufwendig zu realisieren ist. Die Kompensation der radialen Relativbewegung kann auf verschiedene Arten gelöst werden. So besteht eine erste mögliche Lösung darin, den Rahmen, entgegen seiner eigentlichen Stützungsfunktion mit einer möglichst hohen Steifigkeit, nachgiebiger zu gestalten, um so eine Ausweichbewegung des Rahmens gegenüber der thermischen Ausdehnung des Statorkernes zu ermöglichen. Diese erste Lösung kann aber zu mechanischen Instabilitäten führen. Eine zweite mögliche Lösung für die Kompensation der radialen Relativbewegung sind geeignet geformte Klemmelemente zwischen dem Statorkern und dem Rahmen, die in radialer Richtung zu dem Rahmen hin einen Spalt aufweisen, und so die thermische Ausdehnung des Statorkernes in radialer Richtung zulassen ohne unverhältnismässige Gegenkräfte in der Verbindung zwischen dem Statorkern und dem Rahmen hervorzurufen. Problematisch bei dieser zweiten Lösung ist jedoch das Auftreten von Reibung in Klemmbereichen der Klemmelemente.

### DARSTELLUNG DER ERFINDUNG

Aufgabe der vorliegenden Erfindung ist es, eine Kompensation einer radialen Relativbewegung zwischen einem Statorkern und einem Rahmen eines Stators für einen getriebelosen Antrieb einer Rohrmühle mit verminderter Reibung zu ermöglichen.

Diese Aufgabe wird durch einen Stator für einen getriebelosen Antrieb einer Rohrmühle mit den Merkmalen des Patentanspruches 1 gelöst. Bevorzugte Ausführungsformen sind Gegenstand der abhängigen Patentansprüche.

Gegenstand der Erfindung ist es, die radiale Relativbewegung durch ein elastisches Formelement zu kompensieren. Dieses elastische Formelement kann dabei entweder zwischen dem Statorkern und dem Rahmen vorhanden sein, im dem Statorkern integriert sein oder in dem Rahmen integriert sein.

Eine erste bevorzugte Ausführungsform des Stators betrifft eine Anordnung mehrerer elastischer Formelemente, die ausschliesslich radial versetzt sind, um Krafteinleitungen und Kraftsprünge kontinuierlicher zu verteilen und zu homogenisieren.

Eine weitere vorteilhafte Ausführungsform betrifft ein elastisches Formelement, welches durch eine Aussparung, die auch als eine Ausformung oder ein Einschnitt bezeichnet werden kann, innerhalb des Statorkernes oder des Rahmens gebildet wird. Diese integrale Bauweise ist kompakt und reduziert die Anzahl Bauteile.

Eine weitere vorteilhafte Ausführungsform betrifft einen Stator, welcher mehrere übereinander gestapelte Lagen, die auch als Schichten bezeichnet werden können, umfasst und bei dem das elastische Formelement durch eine Materialausnehmung, wie etwa durch Ausstanzen, Ausbrennen, Ausschneiden, Ausbohren, Ausfräsen oder Lochen, aus einer oder mehrerer dieser Lagen realisiert ist. Dadurch werden in der Produktion Herstellungsschritte kombiniert und so Herstellungsaufwand und Herstellungszeit reduziert.

Eine weitere vorteilhafte Ausführungsform betrifft eine Verwendung einer Formfeder, wie etwa einer Biegefeder oder einer Tellerfeder, als elastisches Formelement zwischen dem Statorkern und dem Rahmen. Dies ermöglicht einen separaten, von dem Statorkern und dem Rahmen unabhängigen, Austausch des elastischen Formelementes.

### KURZE BESCHREIBUNG DER FIGUREN

Nachfolgend wird die Erfindung anhand von Ausführungsbeispielen im Zusammenhang mit den Figuren näher erläutert. Die Figuren zeigen jeweils einen Ausschnitt eines Radialschnittes quer zu einer Drehachse einer Rohrmühle durch einen Stator:
- Figur 1: mit zwei Formfedern zwischen einem Statorkern und einem Rahmen als elastische Formelemente;
- Figur 2: mit zwei Aussparungen in einem Statorkern als elastische Formelemente;
- Figur 3: mit zwei Aussparungen in einem Rahmen als elastische Formelemente;
- Figur 4: mit zwei Paaren, ausschliesslich radial versetzter, elastischer Formelemente.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

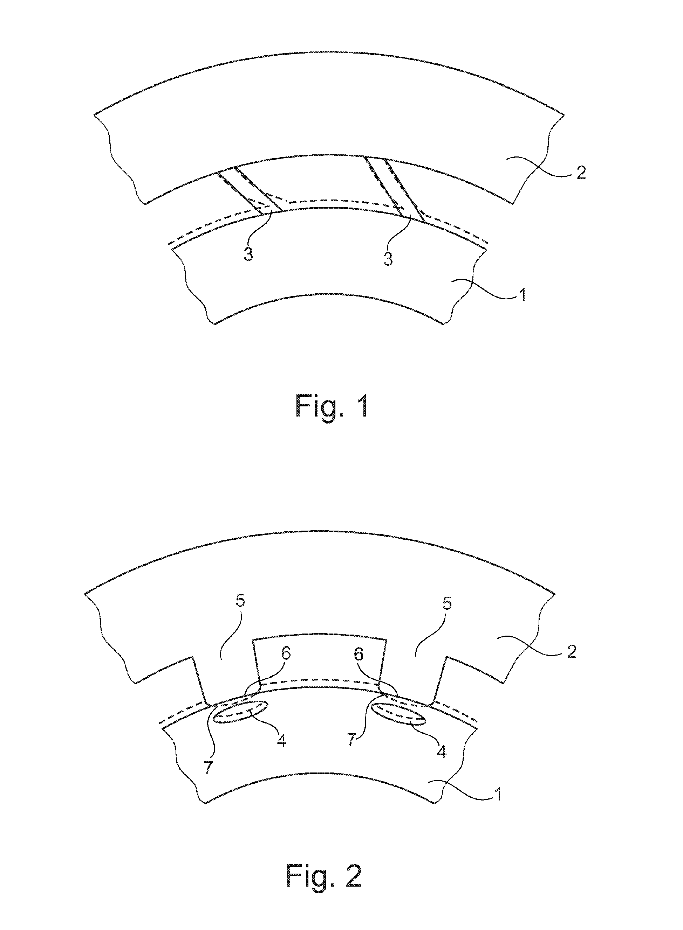

Fig. 1 zeigt einen Ausschnitt eines Stators in einem Radialschnitt. Der Stator ist kreisförmig und umfasst einen Statorkern 1 und einen Rahmen 2. Der Statorkern 1 ist aus einem magnetisierbaren Material, wie etwa Stahl, und geeignet Statorwicklungen aufzunehmen, welche in der Fig. 1 nicht dargestellt sind. Der radial ausserhalb des Statorkernes 1 angeordnete Rahmen 2 dient der mechanischen Fixierung des Statorkernes 1 im Raum. Ein radialer Abstand zwischen dem Statorkern 1 und dem Rahmen 2 beträgt typischerweise zwischen 5 und 30 mm. Zwischen dem Statorkern 1 und dem Rahmen 2 sind Formfedern 3 vorhanden. Diese Formfedern 3 sind als Biegefedern ausgeführt, die um 45 Grad zur tangentialen Richtung des Stators verdreht und über den Umfang des Stators verteilt sind. Im Falle einer Erwärmung des Statorkernes 1 aufgrund einer elektromagnetischen Induktion von Wirbelströmen in dem Statorkern 1 durch die Statorwicklungen und einer damit verbundenen radialen Relativbewegung zwischen dem Statorkern 1 und dem Rahmen 2 aufgrund einer thermischen Ausdehnung des Statorkernes 1 verringert sich der Abstand zwischen dem Statorkern und dem Rahmen. Diese Verringerung wird durch eine Deformation der Formfedern 3 mit einer Verschiebungskomponente in radialer Richtung kompensiert. Die thermische Ausdehnung des Statorkernes 1 und die Deformation der Formfedern sind durch gestrichelte Linien angedeutet.

Die, in Fig.1 angedeutete, kreisförmige Gestaltung des Stators kann alternativ auch durch andere Geometrien ausgeführt werden. Einzige Restriktion der Gestaltungsfreiheit ist dabei eine quasi rotationssymmetrische Gestalt des Statorkernes 1, um eine problemlose Rotation eines Mühlenkörpers zu ermöglichen. Des Weiteren ist auch eine Verwendung anderer Bauformen biegebeanspruchter Formfedern, wie beispielsweise Tellerfeder oder Blattfeder, oder anderer Formfedertypen, wie zug-druckbeanspruchte oder drehbeanspruchte Federn, als elastische Formelemente denkbar. Es ist besonders vorteilhaft die Biegefedern immer mit einem gleichen Drehsinn zu verdrehen und den Drehsinn nicht zu alternieren, da die Deformation der Biegefedern nicht nur die Verschiebungskomponente in radialer Richtung sondern auch eine weitere Verschiebungskomponente in tangentialer Richtung hervorruft, welche im Falle eines alternierenden Drehsinnes gegeneinander wirken und so die Deformation der Biegefedern behindern und grosse Kräfte verursachen. Weiter kann das Verdrehen der Formfedern 3 auch in einem Winkel verschieden von 45 Grad innerhalb der Grenzen von 0 Grad bis 180 Grad erfolgen. Besonders vorteilhaft ist dabei ein Winkel zwischen 30 und 60 Grad, da die Formfedern 3 so nicht nur Kräfte in radialer Richtung sondern auch Kräfte in tangentialer Richtung aufnehmen können. Eine Verteilung der Biegefedern entlang des Umfanges des Stators kann sowohl mit konstanten Abständen zwischen den Formfedern 3, als auch mit unkonstanten Abständen erfolgen.

Gemäss Fig. 2 weist der Rahmen 2 an einer zu dem Statorkern 1 gewandten Seite in radialer Richtung nach innen gerichtete Vorsprünge 5 auf, welche über dem Umfang des Stators verteilt sind. Diese Vorsprünge 5 bilden Kontaktflächen 6 mit dem Statorkern 1. In dem Statorkern 1 sind ellipsenförmige Aussparungen 4 so positioniert, dass zwischen den Vorsprüngen 5 und den Aussparungen 4 Stege 7 geformt sind. Im Falle der Erwärmung des Statorkernes 1 und der damit verbundenen radialen Relativbewegung zwischen dem Statorkern 1 und dem Rahmen 2 kompensiert eine Deformation der Stege 7 diese radiale Relativbewegung. Die thermische Ausdehnung des Statorkernes 1 und die Deformation der Stege 7 sind durch gestrichelte Linien angedeutet.

Die Vorsprünge 5 müssen nicht zwingend ein einstückiger Bestandteil des Rahmens 2 sein und können auch durch separate Elemente ersetzt werden, welche die Kontaktfläche 6 mit dem Statorkern 1 bilden. Die Form der Vorsprünge 5 ist veränderbar, wie etwa ein Trapez anstatt der dargestellten rechteckigen Form. Wichtig ist bei der Formgebung nur, dass eine Kontaktfläche mit dem Rahmen 2 entsteht und ein Vorsprung steifer als der Steg 7 ist, um eine Krafteinleitung auf den Steg zu ermöglichen. Weiter ist ersichtlich, dass die Form der Aussparung 4 beliebig variiert werden kann. Vorteilhaft sind dabei abgerundete Geometrien, welche Kerbwirkungen, die durch die Aussparungen 4 hervorgerufen werden, reduzieren. Ausserdem ist es vorteilhaft, wenn die Abmessung der Aussparungen 4 in tangentialen Richtung grösser ist als die Abmessung der Kontaktflächen 6 in tangentialen Richtung sind, und wenn die Aussparungen 4 zu den Vorsprüngen 5 symmetrisch positioniert sind, da dies eine Krafteinleitung auf den Steg 7 verbessert. In axialer Richtung können sich die Aussparungen 4 sowohl durchgehend über die entsprechende Abmessung des Statorkernes 1 als auch nur über einen Teil davon erstrecken. Bei letzterem Fall können die Aussparungen 4 auch axial versetzt sein. Besonders vorteilhaft ist es, wenn die Aussparungen 4 sich über die gesamte Abmessung des Statorkernes 1 in axialer Richtung erstrecken, da dies einfacher zu fertigen ist.

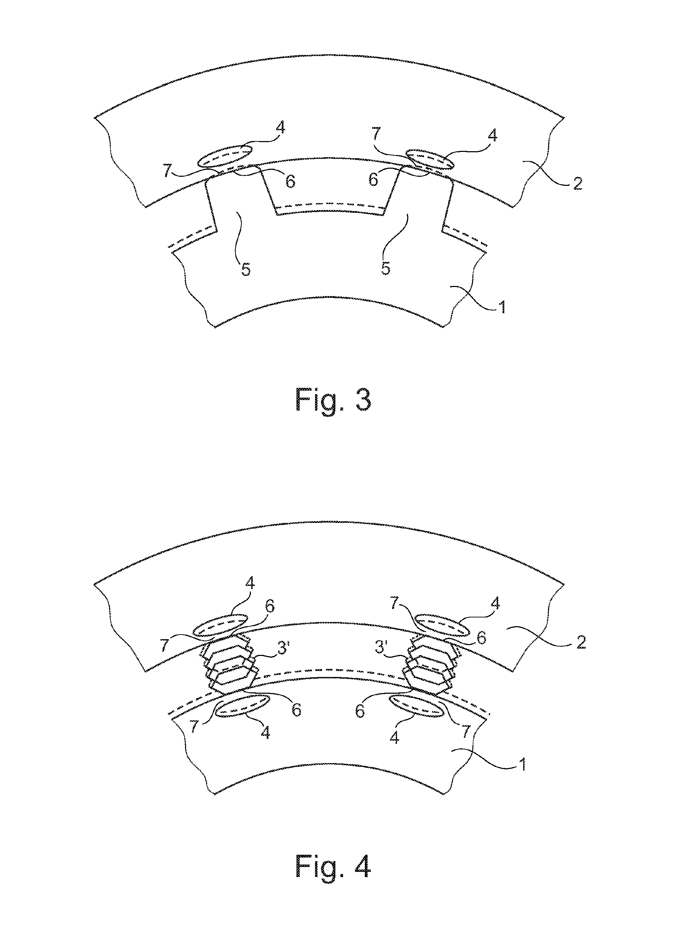

Fig. 3 zeigt eine Konfiguration wie Fig. 2 mit einem Unterschied, dass die Vorsprünge 5 ein Bestandteil des Statorkernes 1 sind, und daher radial nach aussen gerichtet sind, und dass sich die Aussparungen 4 in dem Rahmen 2 befinden. Auch in Fig. 3 ist die thermische Ausdehnung des Statorkernes 1 mit der Deformation der Stege 7 durch gestrichelte Linien angedeutet.

Fig. 4 zeigt einen Stator, der Aussparungen 4 sowohl in dem Statorkern 1 als auch in dem Rahmen 2 aufweist. Anstelle von Vorsprüngen 5 umfasst der Stator Formfedern 3', die in Fig. 4 als Tellerfedern ausgeführt sind. Die Aussparungen 4 sind so positioniert, dass zwischen den Formfedern 3' und den Aussparungen 4 Stege 7 geformt sind. So ergibt sich eine Anordnung, in der zwei, durch die Stege 7 gebildete, elastische Formelemente und eine Formfeder 3' ausschliesslich radial versetzt sind. Im Falle der Erwärmung des Statorkernes 1 kompensieren sowohl die Deformation der Stege 7 wie auch die Deformation der Formfedern 3' die resultierende radiale Relativbewegung. Die thermische Ausdehnung des Statorkernes 1 und die Deformation der Stege 7 und der Formfedern 3' sind durch gestrichelte Linien angedeutet.

Es ist aber weiter ersichtlich, dass bei einer solchen Serieschaltung der elastischen Formelemente in ausschliesslich radialer Richtung auch andere Formfedertypen, wie zug-druckbeanspruchte, biegebeanspruchte oder drehbeanspruchte Federn, und Aussparungen 4 in Vorkommen, Anzahl und Reihenfolge frei kombinierbar sind.

### BEZUGSZEICHENLISTE

- 1: Statorkern
- 2: Rahmen
- 3, 3': Formfeder
- 4: Aussparung
- 5: Vorsprung
- 6: Kontaktfläche
- 7: Steg

## Patentansprüche

1. Stator für einen getriebelosen Antrieb einer Rohrmühle mit einem Statorkern (1) zur Aufnahme von Statorwicklungen und einem radial ausserhalb des Statorkernes (1) angeordneten Rahmen (2) zur mechanischen Fixierung des Statorkernes (1), **dadurch gekennzeichnet, dass** ein elastisches Formelement zwischen dem Statorkern (1) und dem Rahmen (2), in dem Statorkern (1) oder in dem Rahmen (2) zur Kompensation einer radialen Relativbewegung zwischen dem Statorkern (1) und dem Rahmen (2) vorhanden ist.

2. Stator nach Anspruch 1, **dadurch gekennzeichnet, dass** ein weiteres elastisches Formelement zwischen dem Statorkern (1) und dem Rahmen (2), in dem Statorkern (1) oder in dem Rahmen (2) vorhanden ist, welches zu dem elastischen Formelement ausschliesslich radial versetzt ist.

3. Stator nach Anspruch 1 oder 2, **dadurch gekennzeichnet, dass** das oder das weitere elastische Formelement durch eine Aussparung (4) in dem Statorkern (1) oder in dem Rahmen (2) gebildet ist.

4. Stator nach Anspruch 3, wobei der Statorkern (1) oder der Rahmen (2) mehrere in axialer Richtung gestapelte Lagen umfasst, **dadurch gekennzeichnet, dass** die Aussparung (4) durch eine Materialausnehmung in einer oder mehreren der Lagen gebildet ist.

5. Stator nach Anspruch 1 oder 2, **dadurch gekennzeichnet, dass** das oder das weitere elastische Formelement eine Formfeder (3, 3') zwischen dem Statorkern (1) und dem Rahmen (2) ist.

6. Stator nach einem der Ansprüche 1 bis 5, **dadurch gekennzeichnet, dass** eine Vielzahl von elastischen Formelementen über einen Umfang des Statorkernes (1) verteilt sind.

7. Statorkernstück für einen getriebelosen Antrieb einer Rohrmühle, wobei mehrere Statorkernstücke einen Statorkern (1) bilden, welcher Statorwicklungen aufnimmt und von einem radial ausserhalb des Statorkernes (1) angeordneten Rahmen (2) mechanisch fixiert ist, **dadurch gekennzeichnet, dass** das Statorkernstück ein elastisches Formelement zur Kompensation einer radialen Relativbewegung zwischen dem Statorkern (1) und dem Rahmen (2) aufweist.

8. Statorkernstück nach Anspruch 7, **dadurch gekennzeichnet, dass** das elastische Formelement durch eine Aussparung (4) in dem Statorkernstück gebildet ist.

9. Rahmenstück für einen Stator eines getriebelosen Antriebes einer Rohrmühle, wobei mehrere Rahmenstücke einen Rahmen (2) bilden, welcher radial ausserhalb eines Statorkernes angeordnet ist und den Statorkern (1) mechanisch fixiert, **dadurch gekennzeichnet, dass** das Rahmenstück ein elastisches Formelement zur Kompensation einer radialen Relativbewegung zwischen dem Statorkern (1) und dem Rahmen (2) aufweist.

10. Rahmenstück nach Anspruch 9, **dadurch gekennzeichnet, dass** das elastische Formelement durch eine Aussparung (4) in dem Rahmenstück gebildet ist.

11. Verfahren zur Herstellung eines Stators für einen getriebelosen Antrieb einer Rohrmühle mit einem Statorkern und einem Rahmen, wobei der Statorkern (1) oder der Rahmen (2) mehrere in axialer Richtung gestapelte Lagen umfasst, welches die folgenden Schritte beinhaltet:
a) die Lagen des Statorkernes (1) oder des Rahmens (2) aus einem Blech ausformen;
b) aus einer der Lagen zur Formung eines elastischen Elementes in dem Statorkern (1) oder dem Rahmen (2) Blechmaterial ausnehmen
c) die Lagen stapeln.
